Europäisches Patentamt

(19) European Patent Office

Office européen des brevets

(11) Veröffentlichungsnummer: **0 192 846**
A1

(12) **EUROPÄISCHE PATENTANMELDUNG**

(21) Anmeldenummer: **85116006.9**

(22) Anmeldetag: **16.12.85**

(51) Int. Cl.⁴: **A 61 C 5/06**

(30) Priorität: **22.02.85 DE 3506345**

(43) Veröffentlichungstag der Anmeldung:
**03.09.86 Patentblatt 86/36**

(84) Benannte Vertragsstaaten:
**DE GB IT NL SE**

(71) Anmelder **Mühlbauer, Ernst**
**Fangdieckstrasse 61**
**D-2000 Hamburg 53(DE)**

(72) Erfinder **Mühlbauer, Ernst**
**Fangdieckstrasse 61**
**D-2000 Hamburg 53(DE)**

(74) Vertreter: **Glawe, Delfs, Moll & Partner Patentanwälte**
**Postfach 26 01 62 Liebherrstrasse 20**
**D-8000 München 26(DE)**

(54) **Portionspackung für Silberfeilung zur Bereitung von Dentalamalgam.**

(57) Die Portionspackung besteht aus einem durch die Misch-vibration zerstörbaren Folienbeutel, der einen Preßkörper aus Silberfeilung enthält. Die Dichte des Preßkörpers beträgt nicht mehr als etwa 8 g/cm³ entsprechend einem Porenvolumen von etwa 20 %. Dadurch kann auf die Verwendung eines Pistills verzichtet werden.

EP 0 192 846 A1

Croydon Printing Company Ltd.

Portionspackung für Silberfeilung zur
Bereitung von Dentalamalgam

Beschreibung

Die Erfindung bezieht sich auf eine Portionspackung für
Silberfeilung        zur Bereitung von Dentalamalgam in
einem Vibrations-Mischgerät, die von einem wenigstens einen
Preßkörper aus Silberfeilung enthaltenden, durch die Mischvibration zerstörbaren Folienbeutel gebildet ist.

Dentalamalgam wird vom Zahnarzt aus Silberfeilung und
Quecksilber bereitet. Zwecks genauerer Dosierung ist es
bekannt, Portionspackungen von beiden Komponenten vorzubereiten, die zusammen in eine Mischkapsel gegeben werden,
die in einem Mischgerät einer Mischvibration von beispielsweise 300 Hz  ausgesetzt wird. Bekannte Portionseinheiten
für die Silberfeilung bestehen aus tablettenförmigen Preßkörpern, die in größerer Zahl lose in einem geeigneten

Glawe, Delfs, Moll & Partner - 0192846

Verpackungsbehälter geliefert werden. Damit sie nicht durch gegenseitigen Abrieb zu viel ihres Gewichts verlieren und damit sie ohne Bruchgefahr gehandhabt werden können, sind sie mit hoher Dichte verpreßt, die bis auf wenige Prozent der Dichte des massiven Metalls nahekommt. Dennoch können sie infolge von Abrieb, insbesondere wenn sie ungeschickt gehandhabt werden und lange in dem gemeinsamen Behälter verbleiben, einen Gewichtsverlust von unerwünschter Größe erreichen. Auch haben Sie den Nachteil, daß sie nur bei Anwesenheit eines Pistills sich in der Mischkapsel unter der Vibrationseinwirkung hinreichend in reaktionsfähiges Pulver zerlegen. - Bekannt ist es auch, derartige Preßkörper in einem Folienbeutel aufzubewahren (EP-OS 83 106 110), wodurch wenigstens der Abriebverlust ausgeschaltet, die Notwendigkeit eines Pistills jedoch nicht vermieden wird. - Bekannt ist es ferner, die Silberfeilung pulverförmig in den Folienbeutel zu geben, was den Vorteil hat, daß sie sofort in reaktionsfähiger Form vorliegt; trotzdem ist in den meisten Fällen ein Pistill erforderlich, nämlich um die Zerstörung des Folienbeutels zu bewerkstelligen. Zwar kann man den Folienbeutel so dünn gestalten, daß er auch ohne Pistill unter den vom Pulver und dem benachbarten Quecksilber bei der Mischvibration ausgeübten Beschleunigungskräften zerreißt; jedoch ist oft die Verwendung etwas dickerer Folien erwünscht, die eine höhere Sicherheit für eine gute Trennung der Komponenten und gegen die Entstehung kleinerer Folienreste geben, die die saubere Entnahme des Amalgams erschweren könnten.

Der Erfindung liegt daher die Aufgabe zugrunde, eine Portionspackung der eingangs genannten Art zu schaffen,

Glawe, Delfs, Moll & Partner - . 0192846

die einfacher in der Handhabung ist.

Die erfindungsgemäße Lösung besteht darin, daß der Preßkörper eine Dichte von nicht mehr als etwa 8 g/cm³ ,
vorzugsweise nicht mehr als 7,5 g/cm³ , hat.

Dies entspricht einem Unterschied zur Dichte des massiven
Metallmaterials von 17-22 %, der in dem Preßkörper als
Porenvolumen enthalten ist. Die Dichte läßt sich daher
auch dahingehend definieren, daß das Porenvolumen des Preßkörpers mindestens etwa 20 % beträgt.

Die geringere Preßkörperdichte hat überraschenderweise zur
Folge, daß auf die Verwendung eines Pistills verzichtet
werden kann. Einerseits reicht die Druckfestigkeit des
Preßkörpers aus, um ihn als einheitlichen Schlagkörper wirken zu lassen, wenn es darum geht, die ihn umgebende Folie
zu zerstören. Andererseits ist die Druckfestigkeit so gering, daß die bei der Mischvibration auftretenden Beschleunigungskräfte zu seiner Zerlegung in reaktionsfähiges Pulver ausreichen. Diese Druckfestigkeit ist (gemessen in
Durchmesserrichtung einer Probetablette von 2 mm Höhe und
6 mm Durchmesser) nicht größer als etwa 50 N. Typischerweise liegt sie in der Größenordnung von 40 N. Demgegenüber ist die Druckfestigkeit der bekannten Preßkörper mindestens etwa doppelt so groß.

Zwar kann die geringe Dichte der Preßkörper dazu führen, daß
sie bei mechanischer Handhabung durch Abrieb Gewichtsverluste erleiden oder zerbrechen; jedoch kann dies während
der fabrikatorischen Handhabung vor der Verpackung durch entsprechend schonende Behandlung leicht vermieden werden,
während es ohne Belang ist, nachdem der Preßkörper in den
Folienbeutel eingeschlossen wurde.

## Beispiel:

Handelsübliche Silberfeilung mit folgender Zusammensetzung:

Silber: 68 Gew.-%
Zinn: 26 Gew.-%
Kupfer und Zink: Rest

wird zu Tabletten gepreßt, die von zwei zueinander parallelen
Flächen und einer senkrecht dazu stehenden Zylinderfläche
begrenzt sind. Der Durchmesser beträgt 6 mm. Die Höhe beträgt 2 bzw. 3 mm. Das Gewicht beträgt 400 bzw. 600 mg.
Dafür wird ein Preßdruck von etwa 10 kN aufgewendet. Es
ergibt sich eine Dichte von 7,1 g/cm$^3$. Die Druckfestigkeit
zwischen zwei diametral auf die Zylinderoberfläche wirkenden
Platten beträgt 40 N.

Demgegenüber haben bekannte Preßkörper gleichen Gewichts
eine Höhe von etwa 1,5 bzw. 2,5 mm, werden mit einem Preßdruck von etwa 20 kN gepreßt und haben eine Druckfestigkeit
um 100 N.

Die erfindungsgemäßen Preßkörper wurden eingesiegelt in
Folienbeutel aus Surlyn-Folie, mit einer Foliendicke von
0,05 - 0,07 mm.

Eine Portionspackung wurde mit einer entsprechenden Quecksilberportionspackung in einer üblichen länglichen Mischkapsel in einem handelsüblichen Vibrationsmischgerät in

0192846

ihrer Längsrichtung einer Vibration von 300 Hz unterworfen. Der den Preßkörper umgebende Folienbeutel wurde
durch die Vibration geöffnet, ohne zu kleinen Teilen zerrissen zu werden. Der Preßkörper selbst zerfiel zu Pulver
und mischte sich einwandfrei mit dem Quecksilber.

Die erfindungsgemäße Portionspackung kann schon fabrikmäßig zusammen mit entsprechenden Quecksilberportionen
oder Quecksilberportionspackungen in Mischkapseln, die
dann als Einwegmischkapseln verwendet werden, in den
Handel gebracht werden. Statt dessen ist es auch möglich,
die erfindungsgemäße Portionspackung einzeln zu vertreiben,
nämlich in Form einer Vielzahl solcher Portionspackungen
in einem gemeinsamen Behälter, beispielsweise wie dies
bislang mit einzelnen Preßkörpern von Silberfeilung üblich
ist. Die Portionspackung wird dann vom Zahnarzt zusammen
mit dem Quecksilber in eine mehrfach verwendbare Mischkapsel gegeben.

GLAWE, DELFS, MOLL & PARTNER

Ernst Mühlbauer,

Hamburg

Portionspackung für Silberfeilung zur Bereitung von
Dentalamalgam

PATENTANWÄLTE
ZUGELASSENE VERTRETER BEIM EUROPÄISCHEN PATENTAMT

0192846

RICHARD GLAWE          KLAUS DELFS
Dr.-Ing.               Dipl.-Ing.
WALTER MOLL            ULRICH MENGDEHL
Dipl.-Phys. Dr. rer. nat.   Dipl.-Chem. Dr. rer. nat.
ULRICH GLAWE           HEINRICH NIEBUHR
Dipl.-Phys. Dr. rer. nat.   Dipl.-Phys. Dr. phil. habil.

8000 München 26        2000 Hamburg 13
Postfach 26 01 62      Postfach 25 70
Liebherrstraße 20      Rothenbaumchaussee 58

Tel. (089) 22 65 48    Tel. (040) 4 10 20 08
Telex 5 22 505         Telex 2 12 921
Telefax (089) 22 39 38 Telefax (040) 45 89 84

HAMBURG

Patentansprüche

1. Portionspackung für Silberfeilung zur Bereitung von
   Dentalamalgam in einem Vibrationsmischgerät, die von
   einem wenigstens einen Preßkörper aus Silberfeilung
   enthaltenden, durch die Mischvibration zerstörbaren
   Folienbeutel gebildet ist, dadurch gekennzeichnet,
   daß der Preßkörper eine Dichte von nicht mehr als etwa
   8 g/cm³ hat.

2. Portionspackung nach Anspruch 1, dadurch gekennzeichnet,
   daß der Preßkörper eine Dichte von nicht mehr als 7,5 g/cm³
   hat.

3. Preßkörper nach Anspruch 1 oder 2, dadurch gekennzeichnet, daß das Porenvolumen des Preßkörpers mindestens
   etwa 20 % beträgt.

4. Portionspackung nach einem der Ansprüche 1 bis 3, dadurch gekennzeichnet, daß die Druckfestigkeit des Preßkörpers (gemessen in Durchmesserrichtung einer Probetablette von 2 mm Höhe und 6 mm Durchmesser) nicht größer als etwa 40 N ist.

Europäisches
Patentamt

**EUROPÄISCHER RECHERCHENBERICHT**

**0192846**

Nummer der Anmeldung

EP 85 11 6006

## EINSCHLÄGIGE DOKUMENTE

| Kategorie | Kennzeichnung des Dokuments mit Angabe soweit erforderlich, der maßgeblichen Teile | Betrifft Anspruch | KLASSIFIKATION DER ANMELDUNG (Int. Cl 4) |
|---|---|---|---|
| D,A | EP-A-0 115 562 (MÜHLBAUER) <br> * Seite 4, Zeile 13 - Seite 5, Zeile 23 * <br><br> --- | 1 | A 61 C 5/06 |
| A | DE-A-3 303 839 (MÜHLBAUER) <br> * Seite 4, Zeilen 10-16 * <br><br> ----- | 1 | |

| | |
|---|---|
| | **RECHERCHIERTE SACHGEBIETE (Int. Cl 4)** |
| | A 61 C 5/00 |

Der vorliegende Recherchenbericht wurde für alle Patentansprüche erstellt

| Recherchenort <br> BERLIN | Abschlußdatum der Recherche <br> 14-05-1986 | Prüfer <br> SIMON J P |
|---|---|---|